# EUROPÄISCHE PATENTANMELDUNG

(11) **EP 2 853 387 A1**
(43) Veröffentlichungstag der Anmeldung: **01.04.2015**
(21) Anmeldenummer: 14186689.7
(22) Anmeldetag: 26.09.2014
(51) Int. Cl.: B32B 17/10, C03C 1/00, C03C 17/00, F41H 5/04, C09D 11/102

(54) **Teilweise beschichtete Verbundglasscheibe sowie Verfahren zu deren Herstellung und Beschichtung für eine Verbundglasscheibe**

(30) Priorität: 30.09.2013 DE 102013110783
(71) Anmelder: Schott AG, 55122 Mainz (DE)
(72) Erfinder: Herrmann, Jochen, 55128 Mainz (DE); Storch, Alexander, 07747 Jena (DE); Bockmeyer, Matthias, 55116 Mainz (DE); Gier, Andreas, 66399 Ormesheim (DE)
(74) Vertreter: Blumbach Zinngrebe

(57) **Zusammenfassung**

Die Erfindung betrifft ein Verfahren zur blickdichten Beschichtung einer beschussfesten Fahrzeugscheibe bei welchem ein Lack, welcher ein Hybridpolymerhydrolysat sowie eine organisch vernetzende Gruppe umfasst, vor dem Autoklavieren eines Verbunds aufgebracht wird.

## Beschreibung

### Gebiet der Erfindung

Die Erfindung betrifft eine beschussfeste Verbundglasscheibe für Fahrzeuge, welche teilweise mit einer blickdichten Beschichtung versehen ist. Weiter betrifft die Erfindung ein Verfahren zur Herstellung einer Verbundglasscheibe sowie einen Lack, welcher als Beschichtungsmaterial für eine beschussfeste Verbundglasscheibe verwendet wird.

### Hintergrund der Erfindung

Beschussfeste Fahrzeugscheiben sind bekannt. Diese bestehen aus einem Verbund aus einer Mehrzahl von transparenten Glas- oder Glaskeramikscheiben sowie Kunststoffscheiben, insbesondere aus Polycarbonat, wobei zwischen den Scheiben eine Kunststofffolie angeordnet ist. Je nach gewünschter Beschussfestigkeit sind die Scheiben in verschiedenen Ausführungsvarianten und -dicken sowohl für militärische als auch für zivile Fahrzeuge verfügbar.

Insbesondere im zivilen Bereich sind derartige Scheiben zumeist gebogen. Im Unterschied zu nicht beschussfesten Verbundglasscheiben, welche aus lediglich zwei Schichten bestehen, werden in der Regel die Schichten einer beschussfesten Verbundglasscheibe als Stapel gebogen und im Anschluss in einem Autoklav laminiert. Beschussfeste gebogene Verbundglasscheiben sind aufwendig herzustellen und deshalb sehr teuer.

Insbesondere im zivilen Bereich besteht die Forderung, dass sich das Aussehen der Scheibe von einer herkömmlichen, nicht beschussfesten Scheibe möglichst wenig unterscheiden sollte. Aus dekorativen Gründen, insbesondere um die randseitigen Klebewülste zu verdecken, weisen Fahrzeugscheiben häufig eine blickdichte schwarze Beschichtung auf, welche insbesondere als eine Art Rahmen ausgebildet ist. Das Beschichtungsmaterial wird oft aber auch nicht nur im Randbereich, sondern auch freiliegend verwendet, beispielsweise um den optischen Eindruck einer tatsächlich nicht vorhandenen Fahrzeugsäule zu vermitteln. Weiter kann das Beschichtungsmaterial auch zum Aufbringen von Logos, Typenbezeichnungen, etc. verwendet werden.

Herkömmliche anorganische Emaille basierte Siebdrucklacke, wie sie zur Beschichtung von nicht beschussfesten Fahrzeugscheiben verwendet werden, sind in der Regel für beschussfeste Fahrzeugscheiben auf Basis von Spezialgläsern wie Borofloat® 33 oder Borofloat® 40 nicht geeignet. Mit diesen Beschichtungen lassen sich keine ausreichend blickdichten Schichten herstellen.

Herkömmliche organische oder hybridpolymere Sprühlacke, welche für die Beschichtung von Glas für dekorative Zwecke verwendet werden und auf die bereits gebogenen Scheiben aufgebracht werden können, sind in der Regel für beschussfeste Fahrzeugscheiben nicht geeignet. Diese verfärben sich beim Laminieren des Schichtenverbunds, welches üblicherweise in einem Autoklav unter hohem Druck durchgeführt wird.

Weiter sind beschussfeste Fahrzeugscheiben vielfach derart ausgebildet, dass im randseitigen Bereich eine geringere Anzahl an Schichten vorhanden ist, sodass die Scheibe insgesamt im randseitigen Bereich dünner ist und besser in einem fahrzeugseitigen Rahmen eingesetzt werden kann. Zumindest in diesem Fall liegt eine blickdichte Beschichtung teilweise zwischen zwei Platten des Verbunds, was sich mit herkömmlichen Emaille basierten Siebdrucklacken ebenfalls nicht realisieren lässt. Hierzu müssen die Scheiben im Verbund gebogen werden und da anorganische Emaillebeschichtungen vor dem Biegen aufgebracht werden müssen, kommt es aufgrund des Aufschmelzens der Emaille dazu, dass die Emaille an der gegenüberliegenden Scheibe anhaftet und an den Ecken abplatzt.

Gemäß der Lehre der Offenlegungsschrift WO 2012/167932 A1 (Schott AG) wird zur Beschichtung von schusssicheren Fahrzeugscheiben ein Sol-Gel-basiertes Lacksystem vorgeschlagen, welches schwarze Pigmente und kettenförmige Nanopartikel enthält. Nur durch die Verwendung von einem hohen Anteil an kettenförmigen Nanopartikeln kann eine ausreichend hohe Schichtdicke zur Erzielung einer blickdichten Schicht erreicht werden. Der Sol-Gel-basierte Lack wird nach dem Trocknen eingebrannt, so dass organische Bestandteile entfernt werden und eine mikro- und mesoporöse Schicht entsteht. Durch die kettenförmigen Nanopartikel und durch das Vorliegen einer rein anorganischen pigmentierten Sol-Gel-Schicht ist ein derartiges Lacksystem auch geeignet, einen Keramisierungs- oder Biegeprozess zu überstehen ohne an der gegenüberliegenden Scheibe anzuhaften. Es kann gefolgert werden, dass dies aufgrund der porös ausgebildeten Sol-Gel-Schicht erfolgt, welche nicht mehr während des Biegeprozesses aufschmilzt.

Es hat sich aber herausgestellt, dass die in dem Dokument beschriebene Beschichtung eine für viele Anwendungszwecke nicht hinreichende Kratzbeständigkeit aufweist. Dies kann auf das Vorliegen einer hochporösen Beschichtung zurückzuführen sein. So ist das Beschichtungsmaterial, insbesondere für Anwendungen bei denen die Beschichtung frei liegt, wenig geeignet. Des Weiteren besteht eine erhöhte Gefahr von Ausschuss durch während des Herstellungsprozesses beim Handling verursachte Kratzer. Auch ist eine relativ hohe Schichtdicke erforderlich, um eine vollständig blickdichte Beschichtung bereitstellen zu können.

### Aufgabe der Erfindung

Der Erfindung liegt demgegenüber die Aufgabe zugrunde, die genannten Nachteile des Standes der Technik zu reduzieren.

Es ist insbesondere eine Aufgabe der Erfindung, ein Verfahren zur Herstellung einer beschussfesten Verbundglasscheibe für Fahrzeuge bereitzustellen, bei welchem das Beschichtungsmaterial einfach aufzubringen ist und eine gute mechanische Beständigkeit aufweist.

### Zusammenfassung der Erfindung

Die Aufgabe der Erfindung wird bereits durch ein Verfahren zur Herstellung einer teilweise blickdicht beschichteten Verbundglasscheibe für Fahrzeuge, durch eine Verbundglasscheibe sowie durch einen Lack zur Beschichtung einer Fahrzeugscheibe nach einem der unabhängigen Ansprüche gelöst.

Bevorzugte Ausführungsformen und Weiterbildungen der Erfindung sind dem Gegenstand der jeweiligen Unteransprüche zu entnehmen.

Die Erfindung betrifft ein Verfahren zur Herstellung einer teilweise beschichteten Verbundglasscheibe für Fahrzeuge.

Es handelt sich dabei insbesondere um ein transparentes, beschussfestes Verbundglasmaterial, welches als Fahrzeugverglasung verwendet wird.

Das Verbundglaslaminat besteht dabei in der Regel aus mehreren Glasscheiben, einer oder mehreren Polymerfolien sowie einer oder mehreren Platten aus einem Polymermaterial, welche in besonderer Weise zur Stabilität des Verbundmaterials beitragen. Hierfür wird insbesondere Polycarbonat verwendet.

Die Verbundglasscheibe weist als blickdichte Beschichtung insbesondere einen schwarzen Rahmen auf, welcher Verklebungen, elektronische Bauteile, etc. überdecken soll. Die blickdichte Beschichtung sollte im Wellenlängenbereich von 300 bis 800 nm eine Transmission von weniger als 1 % aufweisen.

Die Verbundglasscheibe kann, insbesondere für zivile Fahrzeuge, gebogen sein und umfasst vorzugsweise zumindest zwei Glas- oder Glasskeramikscheiben.

Der L-Wert der Beschichtung sollte im Lab-Farbraum bei weniger als 26 liegen.

Das Verbundglasmaterial sollte eine hohe Transmission und einen neutralen Farbeindruck aufweisen. Sofern Gläser verwendet werden, sollten insbesondere eisenarme, farbneutrale Gläser verwendet werden. Insbesondere werden keine preiswerten Kalk-Natrongläser eingesetzt.

Es kann insbesondere Borosilikatglas, Kalk-Natronglas, Boroalumosilikatgläser oder Alumosilikatglas verwendet werden.

In einer besonderen Ausführungsform können auch chemisch vorgespannte Spezialgläser wie bspw. Corning Gorilla® 1, 2, 3 oder SCHOTT Xensation® oder Asahi Dragon Tail® eingesetzt werden.

Für die Polymerschichten kann insbesondere ein Polycarbonat, ein Polyacryl, insbesondere Polymethylmethacrylat, Celluloseacetat, ein Butyrat, ein Polyamid, Polyolefin, Polyester oder ein Polyurethan verwendet werden.

Zum Verbinden der Schichten können insbesondere Polyurethane, Butyle, Acryle, Silikone, Epoxyde, Acetate, Polystyrole, etc. verwendet werden.

Sofern einzelne Schichten aus einer Glaskeramik ausgebildet sind, können insbesondere Quarze, Spinelle oder Saphire verwendet werden.

Die einzelnen Glas- oder Glaskeramikscheiben können eine Dicke bis 26 mm haben. Insbesondere haben die einzelnen Scheiben eine Dicke zwischen 0,5 mm und 20 mm, bevorzugt zwischen 1 und 15 mm.

In einer besonderen Ausführungsform können auch Dünnstgläser mit einer Dicke von 20 - 250 µm, wie Corning Willow® Glas oder SCHOTT AF32® eco oder D 263 T eco eingesetzt werden.

Bevorzugt ist die Scheibe gebogen. Das Stichmaß kann dabei insbesondere zwischen 0 und 150 mm liegen.

Es versteht sich, dass einzelne Schichten der Scheibe auch eine Funktionalität, etwa zum Heizen als Heizfolie, zum Tönen der Scheibe etwa als Sonnenschutz etc. haben können.

Besonders bevorzugt für die einzelnen Scheiben wird Borosilikatglas verwendet, insbesondere SCHOTT Borofloat^{®} 33 oder 40.

Gemäß der Erfindung wird ein Sol-Gel-basierter Lack auf eine der Glas- oder Glaskeramikschichten aufgebracht.

Der Lack umfasst zumindest ein hybridpolymeres Sol-Gel-Hydrolysat, also ein zumindest teilweise hydrolysiertes und kondensiertes Sol-Gel-Ausgangsmaterial mit zumindest einer organischen Gruppe, sowie organisch vernetzende Gruppen. Bevorzugt handelt es sich um ein Silizium-Alkoholat.

Bei den organisch vernetzenden Gruppen kann es sich um rein organische Polymere- als auch um Hybridpolymere handeln.

Vorzugsweise vernetzt das hybridpolymere Sol-Gel-Hydrolysat überwiegend anorganisch während ein weiterer Bestandteil des Lacks überwiegend organisch vernetzt.

Der Lack umfasst Pigmentpartikel, insbesondere schwarze Pigmentpartikel.

Gemäß der Erfindung erfolgt das Aufbringen des Lacks nach einem Keramisierungs-, Vorspann- und/oder Biegeprozess.

Mithin wird der Lack nicht vor dem Biegen und/oder Keramisieren, sondern danach aufgebracht.

Der Lack ist mithin während des Herstellungsprozesses der Scheibe keiner derart hohen thermischen Belastung ausgesetzt, dass organische Bestandteile heraus brennen.

Es hat sich vielmehr herausgestellt, dass die organischen Bestandteile des Lacks zu einer erhöhten Kratzfestigkeit führen.

Weiter konnte erreicht werden, dass bereits bei einer relativ dünnen Schichtdicke, insbesondere bei einer Schichtdicke zwischen 5 und 25 µm, bevorzugt zwischen 10 und 20 µm, eine Blickdichtigkeit der Beschichtung erreicht wird.

Das Aufbringen des Lacks erfolgt vorzugsweise durch Sprühen. Dabei wird die Scheibe vor dem Aufsprühen des Lacks in Bereichen, in denen dieser nicht aufgetragen werden soll, mittels einer Folie maskiert.

Der Sol-Gel-basierte Lack wird sodann getrocknet, wobei vorzugsweise sowohl eine organische als auch eine anorganische Vernetzung erfolgt.

Die vorhandene Anorganik sorgt für eine gute Haftung auf dem Glas- oder Glaskeramiksubstrat. Insbesondere erfolgt eine chemische Reaktion der Siloxane mit den Hydroylgruppen des Glases.

Neben der besseren mechanischen Beständigkeit und der höheren Blickdichte ist das erfindungsgemäße Lacksystem sogar geeignet, in unmittelbarem Kontakt mit Kunststoffschichten zu stehen und kann so, zumindest teilweise, nicht nur auf der Innenseite der Scheibe, sondern auch zwischen den Schichten der Scheibe aufgebracht sein.

Nach dem Trocknen des Sol-Gel-basierten Lacks werden die Glas- oder Glaskeramikscheiben gestapelt, wobei zwischen die Scheiben jeweils eine Schicht transparenter Folie, insbesondere aus vorstehend beschriebenen Materialien, gelegt wird.

Sodann wird in einem Autoklav ein Verbund hergestellt. Hierbei werden die Scheiben vorzugsweise bei einer Temperatur von 100 bis 160 °C für 5 bis 20 Stunden einem Druck von 8 bis 14 bar ausgesetzt.

Das Trocknen des Lacks erfolgt vorzugsweise bei einer Temperatur unter 300 °C, besonders bevorzugt unter 250 °C, und ganz besonders bevorzugt zwischen 130 und 200 °C.

Neben Pigmentpartikeln kann der Lack auch Füllstoffpartikel umfassen, welche insbesondere nachstehend näher beschrieben werden.

Die Erfindung betrifft des Weiteren eine mit vorstehend beschriebenem Verfahren hergestellte Verbundglasscheibe.

Insbesondere betrifft die Erfindung eine Verbundglasscheibe, welche eine Mehrzahl von Glas- oder Glaskeramikschichten umfasst, welche über Polymerschichten verbunden sind. Die Verbundglasscheibe ist abschnittsweise mit einem blickdichten Lack beschichtet, der ein anorganisch vernetztes Hybridpolymer aus einem Sol-Gel-Hydrolysat umfasst und welcher teilweise organisch vernetzt ist.

Der Anteil der organischen Modifikation bezogen auf das anorganische Netzwerk beträgt 10 bis 30 Gewichts%.

Der erfindungsgemäße Lack umfasst ein hybridpolymeres Sol-Gel-Hydrolysat sowie ein organisch vernetzendes Polymer mit einer Epoxy-, Isocyanat-, Acrylat-, Methacrylat-, Vinyloder Allyl-Gruppe.

Bei dem organisch vernetzenden Polymer kann es sich auch um ein Hybridpolymer handeln.

Das Sol-Gel-Hydrolysat wird insbesondere aus einem funktionalisierten Alkoxysilan hergestellt, wie einem Epoxy-, Acrylat-, Methacrylat-, Vinyl- oder Allylsilan.

Der Lack enthält insbesondere zwischen 30 und 60 Gewichts% des hybridpolymeren Sol-Gel-Hydrolysats, 5 bis 20 Gewichts% Füllstoffpartikel und 15 bis 40 Gewichts% Schwarzpigmentpartikel.

Weiter enthält der Lack vorzugsweise 10 bis 30 Gewichts% eines organisch vernetzenden Polymers.

Der Massenanteil der organischen Bestandteile im blickdichten getrockneten Lack liegt bei einer bevorzugten Ausführungsform der Erfindung über 5 Gewichts%, bevorzugt über 10 Gewichts% und besonders bevorzugt über 15 Gewichts%.

Insbesondere liegt der Massenanteil der organischen Bestandteile im blickdichten getrockneten Lack zwischen 5 und 60 Gewichts%, vorzugsweise zwischen 10 und 40 Gewichts% und besonders bevorzugt zwischen 15 und 40 Gewichts%.

Der Massenanteil organischer Bestandteile kann über Thermogravimetrie (TG) bestimmt werden. Dabei wird der Anteil über das Gewicht einer Probe vor und nach dem Ausbrennen organischer Bestandteile bestimmt. Es wird dabei eine Aufheizrate von 5 K/Min, bei einer Maximaltemperatur von 900 °C verwendet.

Im nicht getrockneten Zustand hat der Lack vorzugsweise einen anorganischen Vernetzungsgrad von 20 bis 55 %, 20 bis 55 % der Silan-Gruppen sind mithin bereits vor dem Aufbringen vernetzt.

Bei dem Lack handelt es sich also um eine Sol-Gel-basierte Farbe, insbesondere einer hybridpolymeren Sol-Gel-Matrix, der Nanopartikel als Füllstoffe und/oder Pigmente zugesetzt sind.

Als Sol-Gel-Ausgangsstoffe werden bevorzugt Metallalkoholate verwendet, bevorzugt in Form von Alkoxysilanen. Bevorzugt wird ein Tetraalkoxysilan, zum Beispiel Tetraethoxysilan (TEOS) in Kombination mit einem Trialkoxysilan und oder Dialkoxysilan und/oder Monoalkoxysilan, welches eine organische funktionelle Gruppe besitzt, eingesetzt.

Als Tertraalkoxysilan kann insbesondere Tetraethoxysilan verwendet werden.

Bevorzugt wird dabei als Sol-Gel-Vorstufe ein Sol-Gelabgeleitetes Hybridpolymer, welches aus der Umsetzung eines Silans mit der allgemeinen Formel R1Si(OR2)₃ und/oder R2Si(OR2)₂ und/oder R3Si(OR2) mit einem Tetraalkoxysilan mit der allgemeinen Formel Si(OR)₄ im Rahmen einer sauren Hydrolyse und Kondensationsreaktion erhalten worden ist, eingesetzt.

R1 ist eine bevorzugt UV-härtbare organische Gruppe, besonders bevorzugt eine radikalisch polymerisierende Gruppe, ganz besonders bevorzugt methacrylatbasiert und/oder epoxydbasiert.

OR ist eine Alkoholatgruppe, insbesondere ein Ethylat.

R2 ist ein aromatischer und/oder aliphatischer und/oder mittels UV-Strahlung polymersierbarer organischer Rest, bevorzugt ein Methyl und/oder Phenyl und/oder Methacryloxypropyl und/oder Gylcidyloxypropyl.

Die hybridpolymere Sol-Gel-Farbe beziehungsweise der Lack enthält vorzugsweise hydrolysierte und kondensierte epoxyoder methacrylatfunktionalisierte Alkoxysilane als Sol-Gel-Vorstufen.

Um einen hohen Vernetzungsgrad innerhalb der hybridpolymeren Sol-Gel-Matrix zu gewährleisten, werden unter anderem Alkoxysilane mit folgenden funktionellen Gruppen eingesetzt: Epoxy-, Acrylat-, Methacrylat-, Vinyloder Allylsilane. Dies sind zum Beispiel:
Glycidoxypropyltriethoxysilan (GPTES),
Methacryloxypropyltrimethoxysilan (MEMO oder MPTMS),
Methacryloxypropytriethoxysilan (MPTES) oder
Vinyltriehtoxysilan (VTES) oder eine hydrolysierbare Alkoxysilanvorstufe mit einer oder mehreren UV-vernetzbaren oder thermisch vernetzbaren organischen funktionellen Gruppen.

Die Sol-Gel-Farbe wird durch eine Hydrolyse und Kondensationsreaktion hergestellt.

Diese erfolgt durch die gezielte Umsetzung der Monomere mit Wasser. Bevorzugt wird dies in Gegenwart eines Katalysators, insbesondere einer Säure durchgeführt (zum Beispiel HCl, para-Toluolsulfonsäure).

In einer Ausführungsform erfolgt die Hydrolyse durch eine wässrige Nanopartikeldispersion.

Der Vernetzungsgrad des Sol-Gel-basierten Lacks wird über das Verhältnis Wasser zu Monomeren eingestellt, der Vernetzungsgrad liegt dabei bevorzugt zwischen 3 und 80 %, besonders bevorzugt 6 und 70 %, ganz besonders bevorzugt 10 und 60 %. Der Vernetzungsgrad wird über ²⁹Si-NMR bestimmt.

Der Sol-Gel-Lack kann ferner molekulardisperse, kolloidaldisperse oder hybridpolymere Sol-Gel-Vorstufen aus Silizium, Titan, Zirkon, Aluminium, Zink, Magnesium, Calcium und/oder Zinn aufweisen.

Bevorzugt enthält die Sol-Gel-Farbe Füllstoffpartikel, bevorzugt Nanopartikel. Hierbei können nicht oxidische oder oxidische Nanopartikel eingesetzt werden. Dabei können folgende Verbindungen ausgewählt werden: SiO₂ (Siliziumoxid), TiO₂ (Titanoxid), TiN (Titannitrid), Al₂O₃ (Aluminiumoxid) oder TiC (Titancarbid).

Bevorzugt werden SiO₂-Nanopartikel, insbesondere kugel-, ketten-, faser- oder ellipsenförmige SiO₂-Nanopartikel verwendet.

Diese können über einen Flüssigphasensyntheseprozess, zum Beispiel einen Stöberprozess, hergestellt werden.

Die Nanopartikel weisen bei einer bevorzugten Ausführungsform eine Größe zwischen 3 und 300 nm auf, bevorzugt mit einem Durchmesser von 3 und 70 nm und einer Länge von 50 und 300 nm, besonders bevorzugt mit einer Länge zwischen 70 und 150 nm.

In einer bevorzugten Ausführungsform werden SiO₂-Nanopartikel eingesetzt. Die eingesetzten Nanopartikel haben dabei einen mittleren Durchmesser von 7 und 50 nm, bevorzugt 10 und 20 nm. Sie haben vorzugsweise eine kugelförmige Morphologie.

Besonders bevorzugte weitere hybridpolymere Sol-Gel-Vorstufen sind Vinylsilane, Allylsilane, Urethansilane und Mischungen dieser Vorstufen. Unter den Vinylsilanen sind Vinylalkoxysilane, insbesondere Vinyltriethoxysilan und/oder Vinyltrimethoxysilan, besonders bevorzugt. Unter den Allylsilanen sind Allylalkoxysilane, insbesondere Allyltriethoxysilan und/oder Allyltrimethoxysilan, besonders bevorzugt. Unter den Urethansilanen sind Dimethacrylaturethanalkoxysilane, insbesondere Glycerin-1,3-dimethacrylaturethan-triethoxysilan, besonders bevorzugt.

In bevorzugten Ausführungsformen werden dem Lack ein oder mehrere amino-funktionalisierte Silane zugesetzt, insbesondere amino-funktionalisierte Silane sind 3-Aminopropyl-trimethoxysilan, [3-(Methylamino)propyl]trimethoxysilan, [3-(Phenylamino)propyl]trimethoxysilan, [3-(Diethylamino)propyl]trimethoxysilan, 3-[2-(2-Aminoethylamino)ethylamino]propyltrimethoxysilan, N-[3-(Trimethoxysilyl)propyl]ethylendiamin, 1-[3-(Trimethoxysilyl)propyl]harnstoff, Bis(3-(methylamino)propyl)trimethoxysilan und Mischungen dieser Komponenten.

Amino-funktionalisierte Silane verbessern die Schichtvernetzung und die Anhaftung der Schicht an das Substrat.

Ferner kann die Beschichtungszusammensetzung eines oder mehrere Mercaptosilane umfassen. Mercaptosilane verbessern die Haftung der Schicht an das Substrat.

In einer bevorzugten Ausführungsform umfasst die Beschichtungszusammensetzung polyfunktionale organische Monomere und/oder Organosilane. Diese Monomere haben vorzugsweise zwei bis vier organisch vernetzbare funktionelle Gruppen. Bevorzugte Substanzen dieser Gruppe sind Bismethacrylate, Bisepoxyde, Bismethacrylatsilane, Bisepoxydsilane, Bismethacrylaturethansilane Pentaerythriotoltriacrylat, Trimethylolpropan Triglycidylether und Mischungen dieser Substanzen.

Folgende Substanzen oder Mischungen daraus sind besonders bevorzugt: Triethylenglycoldimethacrylat, Diethylenglycoldimethacrylat, Tetraethylenglycoldimethacrylat, Ethylenglycoldimethacrylat, Polyethylenglycoldimethacrylat, Butandioldimethacrylat, Hexandioldimethacrylat, Decandioldimethacrylat, Dodecandioldimethacrylat, Bisphenol-A-dimethacrylat, Trimethylolpropantrimethacrylat, ethoxyliertes Bisphenol-A-dimethacrylat, Bis-GMA (2,2-bis-4-(3-methacryloxy-2-hydroxypropyl)-phenylpropan) und 3,4-Epoxycyclohexylmethyl-3,4-epoxycyclohexancarboxylat sowie Reaktionsprodukte von Isocyanaten, insbesondere Di- und/oder Triisocyanaten, mit OH-Gruppen umfassenden Methacrylaten.

Beispielsweise können dies die Reaktionsprodukte von 1 Mol Hexamethylendiisocyanat mit 2 Mol 2-Hydroxyethylmethacrylat, von 1 Mol (Tri(6-isocyanatohexyl)biuret mit 3 Mol Hydroxyethylmethacrylat oder von 1 Mol Trimethylhexamethylendiisocyanat mit 2 Mol Hydroxyethylmethacrylat sein. Diese werden auch als Urethandimethacrylate bezeichnet.

Das molare Verhältnis von vernetzbaren organischen Silanen zum Monomer des eingesetzten Härters oder Vernetzers kann 35:1 - 10:1, bevorzugt 25:1 - 15:1, betragen.

Der Härter oder Vernetzer kann dabei zum Beispiel das (3,4-Epoxycyclomethyl)3,4epoxycyclohexanecarboxylate sein.

Um die Vernetzungsreaktion der organischen funktionellen Gruppen zu starten, können der Beschichtungslösung thermisch aktivierbare Starter zugegeben sein. Dies können beispielsweise 1,5-Diazobicyclo(4.3.0)non-5-ene, Aluminiumacetylacetonat oder Metylimidazol sein.

Auch können der Beschichtungslösung UV-aktivierbare Starter für kationische oder radikalische Polymerisation wie Triarylsulphoniumsalze, Diaryliodiniumsalze (zum Beispiel Irgacure 250), Ferroceniumsalze, Benzoinderivate, α-Hydroxyalkylphenone (zum Beispiel Irgacure® 184), α-Aminoacetophenone (zum Beispiel. 2-Methyl-1[4-(methylthio)phenyl]-2-morpholinopropanone) oder Acylphosphinoxide (zum Beispiel Irgacure® 819) beispielsweise zugegeben werden.

Je nach Beschichtungsverfahren können auch noch verschiedene Verlaufsmittel, Entschäumer, Entlüfter oder Dispergierungsadditive wie beispielsweise PEG^{®}, BYK^{®} 302, BYK^{®} 306, BYK^{®} 307, DC11^{®}, DC57^{®} oder Airex^{®} 931 bzw. Airex^{®} 930 zugegeben werden, um homogene Schichtdicken und eine homogene Farbverteilung der Beschichtung zu erreichen.

Zusätzlich kann die Sol-Gel-Farbe Bestandteile von Polyurethanharzen, organisch oder anorganisch vernetzende Silikone, Silkonharzen, Silaxane, Polysiloxanen, organischen acrylatbasierende Systeme, bevorzugt Methacrylate, Epoxide, Polyamide, Polyimid und Mischungen derselben enthalten.

Weiter Füllstoffe im Lack können sein:
Pyrogene Silica-Partikel, Alumina-Partikel, pyrogene Kieselsäuren.

Als Pigmente können insbesondere verwendet werden: Plättchen- oder stäbchenförmige Pigmente, beschichtete Effektpigmente und Absorptionspigmente (Cobalt-Oxide /-Spinelle, Cobalt-Aluminium-Spinelle, Cobalt-Titan-Spinelle, Cobalt-Chrom-Spinelle, Cobalt-Nickel-Mangan-Eisen-Chrom-Oxide / -Spinelle, Cobalt-Nickel-Zink-Titan-Aluminium-Oxide / -Spinelle, Eisen-Oxide, Eisen-Chrom-Oxide, Eisen-Chrom-Zink-Titan-Oxid, Magnesium-Eisen-Spinelle, Kupfer-Chrom-Spinelle, Nickel-Chrom-Antimon-Titan-Oxide, Titan-Oxide, Zirkon-Silizium-Eisen-Oxide / -Spinelle.

Als Farbstoffe können verwendet werden: Amines, C12-14-tert-alkyl, mit 1-[2-[5-(1,1-dimethylpropyl)-2-hydroxy-3-nitrophenyl] diazenyl]-2-naphthalenol1-[2-[2-hydroxy-4(or 5)-nitrophenyl]diazenyl]-2-naphthalenol chromium complexe (solvent black® 29)

Bevorzugt werden eingesetzt Magnesium-Eisen-Spinelle, Kupfer-Chrom-Spinelle.

Das Beschichtungsmaterial kann durch ein Sprühverfahren oder ein Druckverfahren aufgebracht werden. Dieses Druckverfahren kann ein Ink-Jet-Druck-, Off-Set-Druck-, Tampon-Druck-, sein.

Vorzugsweise wird das Beschichtungsmaterial mittels eines Sprühverfahrens nach vorheriger Maskierung der Scheibe aufgebracht.

### Beschreibung der Zeichnungen

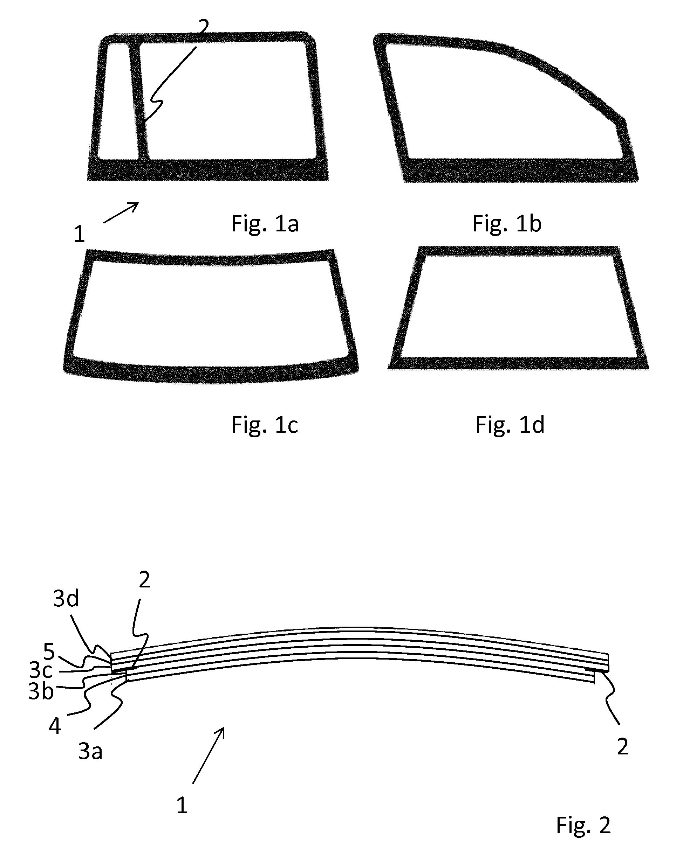

Die Erfindung soll im Folgenden Bezug nehmend auf die Zeichnungen Fig. 1 bis Fig. 4 näher erläutert werden.

Die Figur in Fig. 1a bis Fig. 1d zeigen beispielhafte Ausführungsbeispiele beschussfester Verbundglasscheiben 1.

Die Verbundglasscheiben 1 umfassen einen Lack 2, welcher als blickdichte Beschichtung ausgebildet ist.

Fig. 1a zeigt eine Ausführungsvariante in welcher der Lack 2 nicht nur im Randbereich angeordnet ist, sondern auch in einem frei zugänglichen Bereich und den optischen Eindruck erweckt, die Verbundglasscheibe 1 sei unterteilt.

Fig. 1b bis Fig. 1d zeigen weitere Ausführungsbeispiele von Fahrzeugscheiben.

So zeigt Fig.1b eine Seitenscheibe, Fig. 1c zeigt eine Frontscheibe und Fig. 1d zeigt eine Heckscheibe. Alle Scheiben weisen einen blickdichten Rahmen auf, welcher die Verklebung und elektronische Bauelemente überdecken soll.

Fig. 2 zeigt eine schematische Schnittansicht einer Verbundglasscheibe 1.

Die Verbundglasscheibe 1 ist gebogen und besteht aus einer Mehrzahl gebogener Glasscheiben 3a bis 3d.

Weiter ist zur Verstärkung eine Polycarbonatplatte 5 Teil des Verbunds.

In diesem Ausführungsbeispiel sind die Polycarbonatplatte sowie die Glasscheiben 3c und 3d etwas größer als die innenseitig dazuliegenden Glasscheiben 3a und 3b. Hierdurch wird randseitig eine Stufe ausgebildet, die dem besseren Einsetzen der Verbundsscheibe 1 in einem Rahmen dient.

Die einzelnen Scheiben sind mittels transparenter Folien 4 zusammenlaminiert.

Der als randseitige Beschichtung aufgebrachte blickdichte Lack 2 ist in diesem Ausführungsbeispiel sowohl teilweise als äußerste Schicht auf der Innenseite der Scheibe 3b, als auch zwischen den Scheiben 3c und 3b angeordnet.

Es versteht sich, dass die Verbundglasscheibe noch weitere Schichten und funktionale Beschichtungen enthalten kann, insbesondere Antireflex-Beschichtungen, Kratzschutzbeschichtungen, infrarotreflektierende sowie sonstige tönende Beschichtungen sowie transparente leitfähige Beschichtungen (TCOs) sowie Antibeschlagsbeschichtungen etc.

Die dünsten Scheiben des Verbundmaterials sind in der Regel Schutzgläser vor dem eigentlichen schussfesten Verbund, diese bestehen beispielsweise aus lediglich zwei Glasscheiben, insbesondere aus Borosilikatglas. Dieses kann chemisch oder thermisch vorgespannt sein. Die maximale Dicke kann bis zu 200 mm erreichen, der Verbund kann aus bis zu 12 Scheiben bestehen.

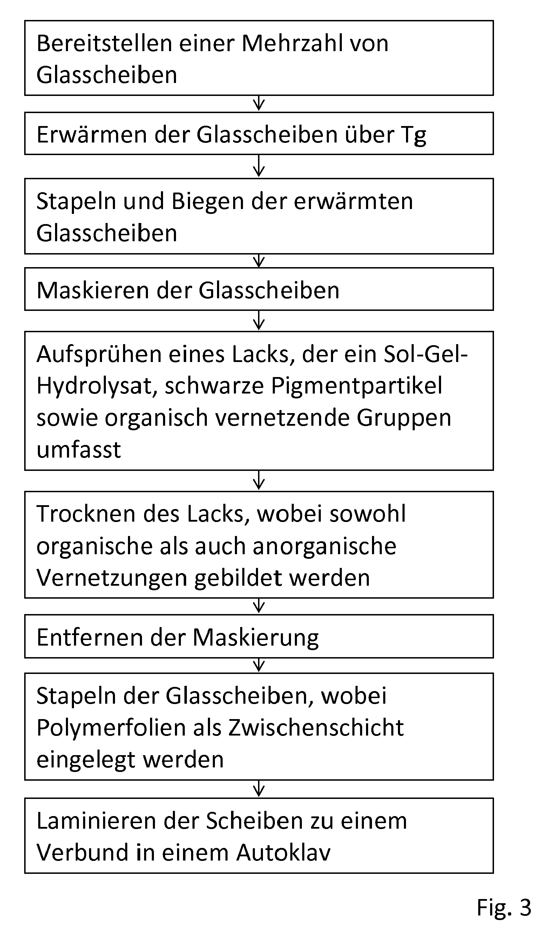

Bezug nehmend auf das in Fig. 3 dargestellte Flussdiagramm soll ein beispielhaftes Herstellungsverfahren näher erläutert werden.

Zunächst wird eine Mehrzahl von Glasscheiben bereitgestellt. Es kann sich dabei auch um Grüngläser handeln, die der Herstellung einer Keramik dienen.

Sodann werden die Glasscheiben über die Transformationstemperatur Tg erwärmt. Insbesondere erfolgt eine Erwärmung zwischen 30 und 150°C über Tg.

Sodann werden die Scheiben gestapelt und in erwärmtem Zustand über einen Zeitraum von 5 bis 48 Stunden gebogen.

Nach dem Abkühlen wird die später innenseitig angeordnete Glasscheibe des Verbunds mit einer Folie maskiert und sodann ein Lack aufgesprüht, der ein Sol-Gel-Hydrolysat, schwarze Pigmentpartikel sowie anorganisch vernetzende Gruppen umfasst.

Der Lack wird anschließend getrocknet, wobei sowohl organische als auch anorganische Vernetzungen gebildet werden. Anschließend wird die Maskierung wieder entfernt und die Glasscheiben werden neu gestapelt, wobei Polymerfolien als Zwischenschicht zum Laminieren eingelegt werden.

In einem Autoklav werden die Scheiben sodann bei einer Temperatur von 100 bis 160 °C über einen Zeitraum von 5 bis 20 Stunden bei einem Druck von 8 bis 14 bar zu einem Laminat verbunden.

Ein erfindungsgemäßer Lack kann beispielsweise wie folgt hergestellt werden:

### Beispiel 1: Binder mit Epoxid-Funktionalisierung

Es werden zunächst 1,63 Mol Glycidyloxypropyltriethoxysilan und 0,41 mol Vinyltriethoxysilan in einem Glaskolben gemischt. Unter Rühren wird anschließend 2,26 mol demineralisiertes Wasser und 0,05 mol para-Toluolsulfonsäure hinzugegeben. Nach einer Rührzeit von 4 Stunden wird mit Hilfe eines Vakuumrotationsverfahrens der bei der Hydrolyse entstandene Ethylalkohol entfernt.

Zu dieser Lösung werden unter Rühren 195,16 g eines alkoholischen kolloidalen Kieselsols (Typ: IPA-ST®) der Fa. Nissan® sowie 0,53 mol 3,4-Epoxycyclohexylmethyl 3,4-epoxycyclohexanecarboxylat hinzugegeben.

Wichtig bei der Synthese ist der Vorvernetzungsgrad der Silan-Komponenten. Hierzu wird durch eine gezielte Steuerung der Hydrolyse- und Kondensationsreaktion, insbesondere über die Wassermenge, ein Vernetzungsgrad von 25 % - 55 %, insbesondere von ca. 40 % eingestellt.

**Organische Vernetzung:** Die verwendete Polymermodifikation (bspw. 3,4-Epoxycyclohexylmethyl 3,4-epoxycyclohexanecarboxylat) sollte in monomeren Struktureinheiten vorliegen mit einem Anteil von mindestens 80 %. Der Anteil der organischen Modifikation sollte einen Anteil von 50 % der Stoffmengen nicht überschreiten.

### Beispiel 2: Binder mit Cyanat-Funktionalisierung:

Es werden zunächst 1,63 Mol Glycidyloxypropyltriethoxysilan und 0,41 mol 3-(Triethoxysilyl)propyl isocyanat in einem Glaskolben gemischt. Unter Rühren wird anschließend 2,26 mol demineralisiertes Wasser und 0,05 mol para-Toluolsulfonsäure hinzugegeben. Nach einer Rührzeit von 4 Stunden wird mit Hilfe eines Vakuumrotationsverfahrens der bei der Hydrolyse entstandene Alkohol entfernt.

Zu dieser Lösung werden unter Rühren 195,16 g eines alkoholischen kolloidalen Kieselsols (Typ: IPA-ST®) der Fa. Nissan® sowie 132,5 g Desmodur® BL 1265 hinzugegeben.

### Lack 1:

Zum Binder gemäß Beispiel 1 werden 168,5 g eines Schwarzpigments (Magensium-Eisen-Spinell der Firma Shepard® Typ 444) und 285,32 g iso-Butanol gegeben. Anschließend wird noch 7,9 g eines Lackadditives (Byk® 306 der Firma Byk) hinzugegeben.

Der Lack wird mittels einer Dissolverscheibe 15 Minuten homogen verrührt.

### Lack 2:

Zum Binder gemäß Beispiel 2 werden 105,3 g eines Schwarzpigments (Solvent Black® 29 der Firma BASF) und 285,32 g iso-Butanol gegeben. Anschließend wird noch 7,9 g eines Lackadditives (Byk® 306 der Firma Byk) hinzugegeben. Der Lack wird mittels einer Dissolverscheibe 15 Minuten homogen verrührt.

### Beschichtung 1:

Der Lack gemäß Beispiel 1 wird mittels Sprühbeschichtung auf ein maskiertes und gebogenes, transparentes Borofloat^{®} 40-Glassubstrat mit einem Ausdehnungskoeffizienten von 4.0 10⁻⁶/K aufgesprüht und anschließend bei 170 °C für eine Stunde getrocknet.

Nach dem Entfernen der Maskierung wird ein gebogenes, transparentes Borofloat^{®}-Glas mit einem schwarzen Rahmen erhalten.

Dieses gebogene und mit einem schwarzen Rahmen beschichtete Glas wird nun mit weiteren gebogenen Borofloat^{®}-Scheiben und/oder Makrolon® und/oder polymeren transparenten Folien zu einem beschussfesten Sicherheitsglas über Laminationsprozesse in einem Autoklaven verbunden.

### Beschichtung 2:

Der Lack gemäß Beispiel 1 wird mittels Sprühbeschichtung auf ein maskiertes und gebogenes, transparentes Borofloat^{®} 40-Glassubstrat mit einem Ausdehnungskoeffizienten von 4 * 10⁻⁶ /K aufgedruckt und anschließend bei 170 °C für eine Stunde getrocknet.

Nach dem Entfernen der Maskierung wird ein gebogenes, transparentes Borofloat^{®}-Glas mit einem schwarzen Rahmen erhalten.

Dieses gebogene und mit einem schwarzen Rahmen beschichtete Glas wird nun mit weiteren gebogenen Borofloat^{®}-Scheiben und/oder Makrolon^{®} und polymeren transparenten Folien zu einem beschussfesten Sicherheitsglas über Laminationsprozesse in einem Autoklaven verbunden.

Die erfindungsgemäßen Lacke zeichnen sich neben einer hohen Kratzfestigkeit auch durch eine gute Beständigkeit gegenüber üblichen Reinigungsmitteln wie Alkoholen, alkalischen und sauren Reinigern aus.

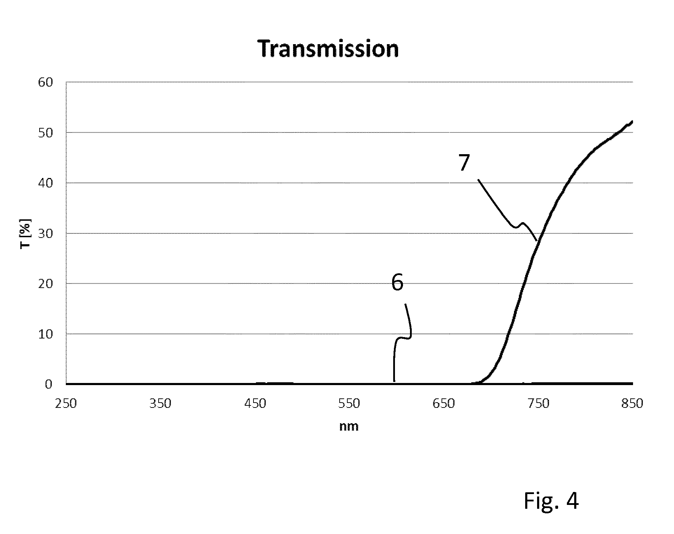

Fig. 4 zeigt den Transmissionsverlauf einer mit einem erfindungsgemäßen Lack eingefärbten Schicht 6.

Auf der x-Achse ist die Wellenlänge in Nanometern und auf der y-Achse die Transmission in % aufgetragen.

Die Kurve 7 zeigt dagegen einen Lack, welcher nur ein nicht organisch vernetzendes Hybridpolymer umfasst.

Zu erkennen ist, dass ohne die organisch vernetzenden Gruppen in Kurve 7 die Transmission oberhalb von 700 nm stark zunimmt. Die Scheibe ist mithin nicht vollständig blickdicht im sichtbaren Bereich.

Kurve 6, welche den Transmissionsverlauf des Lacks mit organisch vernetzten Gruppen zeigt, steigt dagegen auch bis 850 nm überhaupt nicht an. Die Transmission liegt weiter unter 1 %.

## Patentansprüche

1. Verfahren zur Herstellung einer teilweise blickdicht beschichteten Verbundglasscheibe für Fahrzeuge, umfassend die Schritte:
- Bereitstellen einer Mehrzahl von Glas- oder Glaskeramikschichten sowie zumindest einer transparenten Folie,
- abschnittsweise Aufbringen eines Sol-Gel-basierten Lacks auf eine Glas- oder Glaskeramikschicht, welcher zumindest ein hybridpolymeres Sol-Gel-Hydrolysat und organisch vernetzende Gruppen sowie Pigmentpartikel umfasst, wobei das Aufbringen des Lacks nach einem Keramisierungs-, Vorspann-, und/oder Biegeprozess erfolgt,
- Trocknen des Sol-Gel-basierten Lacks,
- Stapeln der Glas- oder Glaskeramikschichten, wobei zwischen die Schichten eine Schicht transparenter Folie gelegt wird,
- Herstellen eines Verbunds in einem Autoklav, wobei der Lack vor dem Einbringen des Stapels in den Autoklav aufgebracht wurde.

2. Verfahren zur Herstellung einer teilweise blickdicht beschichteten Verbundglasscheibe für Fahrzeuge nach dem vorstehenden Anspruch, **dadurch gekennzeichnet, dass** der Lack bei einer Temperatur unter 300 °C, vorzugsweise unter 250 °C getrocknet wird.

3. Verfahren zur Herstellung einer teilweise blickdicht beschichteten Verbundglasscheibe für Fahrzeuge nach einem der vorstehenden Ansprüche, **dadurch gekennzeichnet, dass** ein Lack aufgebracht wird, welcher, Pigmentpartikel sowie Füllstoffpartikel enthält.

4. Verbundglasscheibe, herstellbar, insbesondere hergestellt, mit einem Verfahren nach einem der vorstehenden Ansprüche.

5. Verbundglasscheibe, umfassend eine Mehrzahl von Glasoder Glaskeramikschichten, welche über Polymerschichten miteinander verbunden sind, wobei die Verbundglasscheibe abschnittsweise mit einem blickdichten Lack beschichtet ist , der ein anorganisch vernetztes Hybridpolymer aus einem Sol-Gel-Hydrolysat umfasst und welcher teilweise organisch vernetzt ist.

6. Verbundglasscheibe nach dem vorstehenden Anspruch, **dadurch gekennzeichnet, dass** der Anteil der organischen Modifikation bezogen auf das anorganische Netzwerk 10 bis 30 Gewichts% beträgt.

7. Verbundglasscheibe nach einem der vorstehenden beiden Ansprüche, **dadurch gekennzeichnet, dass** der Lack zumindest teilweise zwischen zwei Glas- oder Glaskeramikschichten angeordnet ist.

8. Verbundglasscheibe nach einem der vorstehenden drei Ansprüche, **dadurch gekennzeichnet, dass** der Massenanteil der organischen Bestandteile im blickdichten Lack zwischen 5 und 60 Gewichts%, vorzugsweise zwischen 10 und 40 Gewichts% und besonders bevorzugt zwischen 15 und 40 Gewichts% beträgt.

9. Lack zur Beschichtung einer Fahrzeugscheibe, umfassend ein hybridpolymeres Sol-Gel-Hydrolysat sowie ein organisch vernetzendes Polymer mit einer Epoxy- Isocyanat-, Acrylat-, Methacrylat-, Vinyl- und/oder Allylgruppe sowie ein Schwarzpigment.

10. Lack nach dem vorstehenden Anspruch, **dadurch gekennzeichnet, dass** das Sol-Gel-Hydrolysat aus einem funktionalisierten Alkoxysilan hergestellt ist, insbesondere einem Epoxy-, Acrylat-, Methacrylat-, Vinyl- oder Allylsilan.

11. Lack nach einem der vorstehenden Ansprüche, **dadurch gekennzeichnet, dass** der Lack einen Vernetzungsgrad zwischen 3 und 80 %, bevorzugt zwischen 6 und 70 %, besonders bevorzugt zwischen 10 und 60 % aufweist und/oder das Sol-Gel-Hydrolysat ein Silan umfasst und der Vernetzungsgrad des Silans im nicht getrockneten Lack 25 bis 55 % beträgt.

12. Lack nach einem der vorstehenden Ansprüche, **dadurch gekennzeichnet, dass** der Lack als Füllstoffe Nanopartikel, insbesondere oxidische Nanopartikel, enthält.

13. Lack nach einem der vorstehenden Ansprüche, **dadurch gekennzeichnet, dass** der Lack zwischen 30 und 60 Gewichts% des hybridpolymeren Sol-Gel-Hydrolysats, 5 bis 20 Füllstoffpartikel und 15 bis 40 Schwarzpigmentpartikel umfasst.

14. Lack nach einem der vorstehenden Ansprüche, **dadurch gekennzeichnet, dass** der Lack 10 bis 30 Gewichts% eines organisch vernetzenden Polymers umfasst.

15. Verwendung eines Lacks nach einem der vorstehenden Ansprüche zur teilweisen Beschichtung von Fahrzeugscheiben.
